# EUROPEAN PATENT SPECIFICATION

(11) **EP 1 185 585 B1**
(45) Date of publication and mention of the grant of the patent: **26.07.2006**
(21) Application number: 00923080.6
(22) Date of filing: 21.03.2000
(51) Int. Cl.: C08L 69/00, C08L 51/04

(54) **COMPOSITIONS CONTAINING POLYCARBONATE AND GRAFTED RUBBER HAVING IMPROVED LOW-TEMPERATURE TOUGHNESS**
THERMOPLASTISCHE FORMMASSEN MIT VERBESSERTER SCHLAGZÄHIGKEIT BEI TIEFEN TEMPERATUREN AUS POLYCARBONATEN UND GEPFROPFTEN KAUTSCHUKEN
COMPOSITIONS CONTENANT DU POLYCARBONATE ET DU CAOUTCHOUC GREFFE PRESENTANT UNE MEILLEURE RESISTANCE A BASSE TEMPERATURE

(30) Priority: 25.03.1999 US 276215
(43) Date of publication of application: 13.03.2002
(73) Proprietor: BAYER CORPORATION, Pittsburgh, PA 15205 (US)
(72) Inventor: SPANGLER, Lora, L., Belchertown, MA 01007 (US); JANARTHANAN, Venkatarayaloo, Vadodara, Gujarat 390 020 (IN)
(74) Representative: Klimiuk, Meike
(86) International application number: PCT/US2000/007616
(87) International publication number: WO 2000/056816

(56) References cited:
- US-A- 4 535 124
- US-A- 4 677 162
- US-A- 4 868 235
- US-A- 4 880 875
- US-A- 5 162 423
- US-A- 5 420 181

## Description

### FIELD OF THE INVENTION

The present invention relates to a thermoplastic molding composition and more particularly to a composition containing polycarbonate and grafted rubber.

### SUMMARY OF THE INVENTION

A thermoplastic molding composition suitable for preparing molded articles having improved properties, most notably high ductility and impact strength at low temperature, is disclosed. The composition contains a resinous blend of aromatic polycarbonate and a mixture of at least two grafted rubbers. The mixture of grafted rubbers contains a "small-mode" component and a "large-mode" component according to claim 1.

### TECHNICAL BACKGROUND OF THE INVENTION

Thermoplastic molding compositions containing grafted rubber, such as ABS, and polycarbonate resin are known. Commercial products based on such compositions, notably Bayblend compositions that are available from Bayer Corporation, have long enjoyed wide market acceptance. U.S. Patents 3,954,905 and 4,560,725 are noted to have disclosed relevant compositions. Also known are compositions which include ABS components, the rubber particles of which conform to bimodal size distributions. The art is noted to include U.S. Patent 3,509,237 which disclosed a composition containing first and second graft copolymers having a rubber substrate and a superstrate of an interpolymer of a monovinylidene aromatic hydrocarbon and an unsaturated nitrile. The first and second graft copolymers have a number average particle size, of 0.8 to 2.0 microns and 0.01 to 0.25 microns respectively. The first graft is said to be a product of suspension polymerization and the second is produced by emulsion. U.S. Patent 4,677,162 is noted for its disclosed composition, which contains polycarbonate, a graft copolymer and an impact modifier. While the graft copolymer entails particles averaging more than 0.75 microns, the impact modifier entailed in the working examples embraces a second graft copolymer having presently relevant chemical makeup and particle size.

### DETAILED DESCRIPTION OF THE INVENTION

The inventive thermoplastic molding composition consists of a blend of (i) 60 to 80 percent polycarbonate resin and (ii) 20 to 40 percent of a mixture of at least two grafted rubbers, said percents being in relation to the weight of the blend, wherein mixture contains
- a small-mode component (ABS-s) consisting of a grafted rubber consisting of a substrate having a particle size, weight average, of 0.15 to 0. 28 micron that is a butadiene homopolymer or an interpolymer of 90 to 95 percent by weight butadiene and 5 to 10 percent by weight of acrylonitrile or styrene and a grafted phase consisting of 60 to 85 percent by weight polymerized monovinylidene aromatic hydrocarbons and 15 to 40 percent by weight polymerized unsaturated nitriles and
- a large-mode component (ABS-l) containing a grafted rubber consisting of a substrate having a particle size, weight average of 0.35 to 0.65 microns, that is a butadiene homopolymer or an interpolymer of 90 to 95 percent by weight butadiene and 5 to 10 percent by weight of acrylonitrile or styrene and a grafted phase consisting of 60 to 85 percent by weight polymerized monovinylidene aromatic hydrocarbons and 15 to 40 percent by weight polymerized unsaturated nitriles
said mixture further characterized in that said small-mode component and large mode component are present in the blend at a weight ratio of 3/27 to 7.5/22.5 therebetween.

In the preferred embodiments, ABS-s is a product of the well-known emulsion polymerization process and ABS-l is a product of the known mass, more preferably continuous mass, polymerization process.

The aromatic polycarbonate resins useful in the context of the present invention include homopolycarbonates and copolycarbonates and mixtures thereof. The suitable polycarbonates have a weight average molecular weight of 10,000 to 200,000, preferably 20,000 to 80,000 and their melt flow rate, per ASTM D-1238 at 300°C, is about 1 to about 65 g/10 min., preferably about 2 to 24 g/10 min. These resins may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph H. Schnell, "Chemistry and Physics of Polycarbonates", Interscience Publishers, New York, New York, 1964, all incorporated herein by reference).

In the present context, dihydroxy compounds suitable for the preparation of the polycarbonates of the inventor conform to the structural formulae (1) or (2). 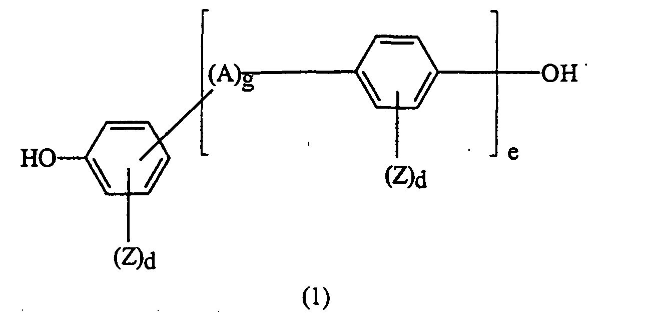 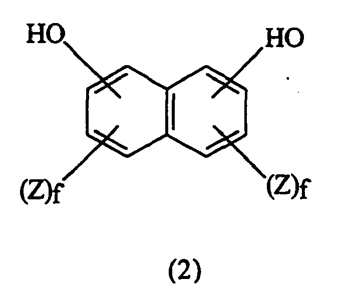 wherein
- A: denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO-, or -SO₂- or a radical conforming to 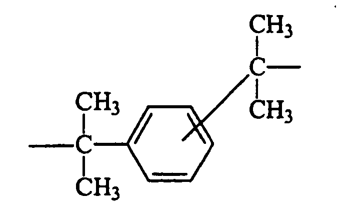 e and g both denote the number 0 to 1; Z denotes F, Cl, Br or C₁₋₄-alkyl and if several
- Z: radicals are substituents in one aryl radical, they may be identical or different from one another;
- d: denotes an integer of from 0 to 4; and
- f: denotes an integer of from 0 to 3.

Among the dihydroxy compounds useful in the practice of the invention are hydroquinone, resorcinol, bis-(hydroxyphenyl)-alkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones, and a,a-bis-(hydroxyphenyl)-diisopropylbenzenes, as well as their nuclear-alkylated compounds. These and further suitable aromatic dihydroxy compounds are described, for example, in U.S. Patents 5,126,428; 5,104,723; 5,041,521; 5,034,457; 3,028,356; 2,999,835; 3,148,172; 2,991,273; 3,271,367; and 2,999,846, all incorporated herein by reference.

Further examples of suitable bisphenols are 2,2-bis-(4-hydroxyphenylrpropane (bisphenol A), 2,4-bis-(4-hydroxyphenyl)-2-methylbutane, 1,1-bis-(4-hydroxyphenyl)-cyclohexane, α,α'-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxyphenyl)-sulfoxide, bis-(3,5-dimethyl-4-hydroxyphenyl)-sulfone, dihydroxybenzophenone, 2,4-bis-(3,5-dimethyl-4-hydroxyphenyl)-cyclohexane, α,α'-bis-(3,5-dimethyl-4-hydroxyphenyl)-p-diisopropyl-benzene and 4,4'-sulfonyl diphenol.

Examples of particularly preferred aromatic bisphenols are 2,2-bis-(4-hydroxyphenyl)-propane, 2,2-bis-(3,5-dimethyl-4-hydroxyphenyl)-propane and 1,1-bis-(4-hydroxyphenyl)-cyclohexane.

The most preferred bisphenol is 2,2-bis-(4-hydroxyphenyl)-propane (bisphenol A).

The polycarbonates of the invention may entail in their structure units derived from one or more of the suitable bisphenols.

Among the resins suitable in the practice of the invention is included phenolphthalein-based polycarbonate, copolycarbonates and terpolycar bonates such as are described in U.S. Patents 3,036,036 and 4,210,741, both incorporated by reference herein.

The polycarbonates of the invention may also be branched by condensing therein small quantities, e.g., 0.05 to 2.0 mol % (relative to the bisphenols) of polyhydroxyl compounds.

Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methylphenol; 2,4-dihydroxybenzoic acid; 2-{4-hydroxyphenyl}-2-(2,4-dihydroxyphenyl)-propane and 1,4-bis-(4,4'-dihydroxytriphenylmethyl)-benzene. Some of the other polyfunctional compounds are 2,4-dihydroxybenzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polycarbonates of the invention are polycondensation in a homogeneous phase and transesterification. The suitable processes are disclosed in the incorporated herein by reference, U.S. Patents 3,028,365; 2,999,846; 3,153,008; and 2,991,273.

The preferred process for the preparation of polycarbonates is the interfacial polycondensation process.

Other methods of synthesis in forming the polycarbonates of the invention such as disclosed in U.S. Patent 3,912,688, incorporated herein by reference, may be used.

Suitable polycarbonate resins are available in commerce, for instance, Makrolon 2400, Makrolon 2600, Makrolon 2800 and Makrolon 3100, all of which are bisphenol based homopolycarbonate resins differing in terms of their respective molecular weights and characterized in that their melt flow indices (MFR) per ASTM D-1238 are about 16.5 to 24, 13 to 16, 7.5 to 13.0 and 3.5 to 6.5 g/10 min., respectively. These are products of Bayer Corporation of Pittsburgh, Pennsylvania.

Polycarbonate resins suitable in the practice of the invention are known and their structures and methods of preparation have been disclosed, for example in U.S. Patents 3,030,331; 3,169,121; 3,395.119; 3,729,447; 4,255,556; 4,260,731; 4,369,303 and 4,714,746 all of which are incorporated by reference herein.

The grafted phase in both grafted rubber components of the instant mixture consist of a monovinylidene aromatic hydrocarbon and an unsaturated nitrile. Examples of the monovinylidene aromatic hydrocarbons which may be used in the preparation of the grafted phase include styrene, alpha-alkyl monovinylidene monoaromatic compounds, e.g., alpha-methylstyrene, alpha-ethylstyrene, alpha-methyl-vinyltoluene, alpha-methyl dialkylstyrenes, etc., ring-substituted alkyl styrenes, e.g.. vinyl toluene, o-ethylstyrene, p-ethylstyrene, 2,4-dimethylstyrene, etc., ring-substituted halostyrenes, e.g., o-chlorostyrene, p-chlorostyrene, o-bromostyrene, 2,4-dichlorostyrene, etc., ring-alkyl, ring-halosubstituted styrenes, e.g., 2-chloro-4-methylstyrene, 2,6-dichloro-4-methylstyrene, etc., vinyl naphthalene; vinyl anthracene, etc. The alkyl substituents generally have 1 to 4 carbon atoms and may include isopropyl and isobutyl groups. If so desired, mixtures of such monovinylidene aromatic monomers may be employed.

Examples of the unsaturated nitriles, which may, singly or in combination one with the others, be used in the preparation of the grafted phase include acrylonitrile, methacrylonitrile, and ethacrylonitrile.

The polymerizable monomer mixture forming the grafted phase consists of 60 to 85 percent, by weight of the vinylidene aromatic hydrocarbon and 40 to 15 percent, by weight of the unsaturated nitrile.

The rubber substrate in both grafted rubber components onto which the grafted phase is grafted during the polymerization process and in the presence thereof is butadiene homopolymer or an interpolymer of 90 to 95 percent by weight butadiene and 5 to 10 percent by weight of acrylonitrile or styrene.

Preferably, the ABS-s component of the invention is made by the known emulsion polymerization process. Its rubber substrate amounts to about 50 to 60% relative to its weight and the grafted phase is characterized in that the weight ratio of the polymerized monovinylidene aromatic hydrocarbons to the polymerized unsaturated nitriles is 70-80/30-20, preferably 75-78/25-22.

In the emulsion polymerization process, the monomers and rubber substrate are emulsified in water by use of suitable emulsifying agents such as fatty acid soaps, alkali metal or ammonium soaps of high molecular weight alkyl or alkaryl sulfates and sulfonates, mineral acid salts of long chain aliphatic amines, etc. Emulsifying agents which have proven particularly advantageous are sodium oleate, sodium palmitate, sodium stearate and other sodium soaps. Generally, the emulsifying agent is provided in amounts of about 1 to 15 parts by weight per 100 parts by weight of the monomers, and water is provided in an amount of about 1 to 4 parts per part of monomers, and even in larger ratios where greater dilution is desirable.

If so desired, aqueous latex formed in the emulsion polymerization of the rubber substrate may provide the aqueous medium into which the monomers are incorporated with or without additional emulsifying agents, etc. However, the rubber may be dissolved in the monomers and the mixture emulsified, or a latex thereof may be separately prepared.

Various water-soluble free radical polymerization initiators are conventionally used for emulsion polymerization of the rubber monomer including conventional peroxy and perazo catalysts and the resultant latex may be used as the aqueous medium with which the interpolymer monomers are admixed. In this manner, the catalyst for the rubber polymerization may function in whole or in part as the catalyst for the graft polymerization. However, additional catalyst may be added at the time of graft polymerization. Exemplary of suitable peroxy catalysts are the alkali metal peroxides, persulfates, perborates, peracetates, and percarbonates, and hydrogen peroxide. If so desired, the catalysts may be activated to form redox systems. In addition, it may be advantageous to include an oil-soluble catalyst such as those hereinbefore identified for mass-emulsion polymerization processes. However, other free-radical generating catalysts may be employed such as actinic radiation.

Chain transfer agents and other polymerization modifiers may desirably be included and it is generally advantageous to incorporate a higher alkyl mercaptan, such as tert-dodecyl mercaptan, which acts both as a promoter and a regulator. In addition, antioxidants and stabilizers such as the alkylated phenols may be added.

The emulsion mixture is then polymerized in an inert atmosphere at temperatures in the range of 20 to 100° centigrade with agitation. Pressures of 1 to 100 pounds per square inch may be employed and the monomers and/or additional catalyst may be added incrementally or continuously over a portion of the reaction cycle. Polymerization is continued until substantially all, i.e., more than 90 percent, of the monomers have reacted. The remaining monomers and other volatile components are then distilled from the latex, which is then dewatered, and dried.

The ABS-I component of the inventive composition is preferably made by the known mass, more preferably continuous mass polymerization process. The rubber in this graft copolymer is preferably butadiene or butadiene/styrene copolymer (90/10 by weight) and the rubber content is about 14 to 20% relative to the weight of the graft copolymer. The grafted phase is characterized in that the weight ratio of the polymerized monovinylidene aromatic hydrocarbons to the polymerized unsaturated nitriles is 73-80/27-20, preferably 75-78/25-22.

In the continuous mass polymerization process, the rubber substrate is initially dissolved in the monomers and the solution, initiator and any other optional components such as a solvent are continuously charged to a stirred or unstirred reactor which provides a continuous polymerization zone containing the polymerizing mixture with a substantially uniform composition throughout. A plurality of reactors may be employed in series with each operating in a continuous mode in which the polymerization is advanced to the required conversion. After polymerization has progressed to the desired conversion level, the residual monomer is stripped from the polymer. The devolatilizing operation, which is the same whether one or a series of polymerization reactors is employed, is conventionally done in a separate device such as a wiped film or falling strand devolatilizer.

Typical prior art processes for the continuous production of grafted rubbers by mass polymerization are described in U.S. Patents 3,243,481, 3,337,750, 3,511,895 and 4,417,030, the content of the latter being incorporated herein by reference.

The polymerization may be initiated by any free radical generating initiator that promotes grafting and is activated at the contemplated reaction temperatures. Suitable initiators comprise the conventional monomer-soluble peroxy and perazo compounds. Exemplary initiators are t-butyl-peroxy-neodecanoate, t-butyl-peroxy-2-ethylhexanoate, 1-t-butyl-azo-1-cyanocyclohexane, di-tert-butyl peroxide, benzoyl peroxide lauroyl peroxide, oleyl peroxide, toluyl peroxide, di-tert-butyl diperphthalate, tert-butyl peracetate, tert-butyl perbenzoate, dicumyl peroxide, tert-butyl peroxide isopropyl carbonate, 2,5-dimethyl-2,5-di-(tert-butylperoxy) hexane, 2,5-dimethyl-2,5-di-(tert-buty)peroxy)-hexyne-3, tert-butyl hydroperoxide, bumene hydroperoxide, p-methane hydroperoxide, cyclopentane, hydroperoxide, diisopropylbenzene hydroperoxide, p-tert-butylcumene hydroperoxide, penant hydroperoxide, 2,5-dimethylhexane-2,5-dihydroperoxide, as well as percarbonate compounds such as t-butyl-2-ethylhexyl-monoperoxycarbonate, etc. and mixtures thereof.

The initiator is generally included within the range of 0.001 to 1.0 percent by weight, and preferably on the order of 0.005 to 0.5 percent by weight of the polymerizable material, depending upon the monomers and the desired polymerization cycle.

It is often desirable to incorporate molecular weight regulators such as mercaptans, halides and terpenes in relatively small percentages by weight, on the order of 0.001 to 1.0% by weight of the polymerizable material. In addition, it may be desirable to include relatively small amounts of antioxidants or stabilizers such as the conventional alkylated phenols. Alternatively, these may be added during or after polymerization. The formulation may also contain other additives such as plasticizers, lubricants, colorants and non-reactive preformed polymeric materials which are suitable or dispersible therein.

A solvent or diluent can be used to dilute the reaction mixture to a point at which the power requirements for agitation in stirred reactor(s) are not excessive. Some or all of such diluents can be introduced with the rubber in monomer solution either as an added component or by use of a rubber which is already dissolved in a suitable solvent. Diluent can also be added separately to one or more of the reactors.

The diluents can be liquid aromatic hydrocarbons containing 6 to 10 carbon atoms, e.g., benzene, toluene, xylene, ethyl benzene, para cymene, cumene or mixtures thereof. Other organic solvents such as saturated aliphatic hydrocarbons, e.g., hexane, cyclohexane, cyclopentane and others having 5 to 7 carbon atoms, ketones, e.g., methyl ethyl ketone, methyl cyclopentane, methyl isobutyl ketone, cyclohexane or methyl propyl ketone can also be used. Methylethyl ketone is preferred.

A preferred continuous mass process for separately preparing ungrafted matrix copolymer is disclosed in U.S. Patent 3,813,369 which is incorporated herein by reference. In summary, the monomers are continuously charged to a well-mixed polymerization reaction zone comprising liquid and vapor phases. The liquid phase contains the monomer composition as a solvent in which copolymer being formed from the monomer composition is dissolved. The vapor phase above the liquid phase comprises the monomer composition. Liquid and vapor are continuously removed from the reaction zone and replenished by charging at a rate about equal to the rate at which the monomers are polymerized and removed. The removed vapor phase may be condensed by reflux condensation and returned to the reaction zone as part of the monomer composition being charged to the zone. The mixture of withdrawn polymer and monomer is passed through one or more devolatilizers of the type referred to above to separate out the polymer. The hot melt may then be pelletized in conventional apparatus while the separated monomer is condensed and retumed to the reaction zone. Chain transfer agents and liquid solvents, initiators, and other additives of the type described above with respect to the continuous mass graft polymerization process may be charged continuously with the monomer composition or separately to the reaction zone.

The average particle size of a rubber graft copolymer - i.e., the rubber substrate and its graft copolymer superstrate, is based upon the average of the particles of the several sizes in each rubber graft copolymer component. Particle size is measured using a photosedimentometer by the published procedure of Graves, M. J. et. al. "Size Analysis of Subsieve Powders Using a Centrifugal Photosedimentometer", British Chemical Engineering 9:742- 744 (1964). Alternatively an electron microscope may be used.

The inventive composition may be prepared and processed conventionally by means and the following procedures that are well known to the art-skilled.

### EXAMPLES

Compositions demonstrating the invention have been made and their properties were determined. The table below summarizes the results of the evaluation. In preparing the composition, the following components were used:
Polycarbonate: a homopolycarbonate based on bisphenol A, having a melt flow rate of about 11 gm/10 min. as determined in accordance with ASTM D-1238.
ABS-I (a): a graft copolymer containing 16% butadiene/styrene (90/10 wt.%) rubber and having the ratio of S/AN of 77/23, having a particle size, weight average, of 0.64 microns.
ABS-I (b): a graft copolymer containing 16% butadiene/styrene (90/10 wt.%) rubber and having the ratio of S/AN of 77/23, having a particle size, weight average, of 0.35 microns.
ABS-s: a graft copolymer containing 53% butadiene rubber, and having SAN ratio of 73/27 and a weight average particle size of 0.28 microns.
SAN: a copolymeric phase having a ratio of styrene/acrylonitrile of 72.5/27.5.

The Vicat temperature was determined in accordance with ASTM 1525; Izod impact strength, in accordance with ASTM D 256; Multiaxial impact strength, in accordance with ASTM D3763 (test velocity 6.7 m/s; striker mass selected to minimize velocity loss during impact.) Ductility: the definition of ductile failure for the examples presented in the table below, is based on General Motors Engineering standard GMP.ABS+PC.002. Using the multiaxial impact test, a test specimen is deemed to have exhibited ductile failure if the puncture of the test specimen is accompanied by cracks radiating no more than 10 mm beyond the center of the impact point. The reported ductile failures denote the percents of the specimens failed in this fashion, out of the fifteen specimens tested.

The compositions also contained a mold release agent and an antioxidant in conventional amounts, having no criticality in the context of the invention. The compositions of the invention (represented by Examples 1, 2, 3 and 4) are set in comparison to a corresponding composition, Example 5, which although containing a corresponding amount of rubber and exhibits largely identical or better Vicat properties and Izod impact strength, is characteristically more brittle at low temperature than are the inventive compositions.

| | 1 (Com.) | 2 | 3 (Com) | 4 | 5 (Com.) |
|---|---|---|---|---|---|
| Polycarbonate | 70 | 70 | 70 | 70 | 70 |
| ABS-I(a) | 30 | 27 | | | |
| ABS-I(b) | | | 30 | 27 | |
| ABS-s | | 3 | | 3 | 13 |
| SAN | | | | | 17 |
| Total Rubber | 4.8 | 5.91 | 4.8 | 5.91 | 6.89 |
| | | | | | |
| Properties | | | | | |
| Vicat temperature (°C) 1Kg@120°C/hr | 144 | 144.9 | 144.2 | 144.3 | 145 |
| Impact Strength, Izod (ft-lb/in) | | | | | |
| 1/8" At 23°C | 11.7 | 10.9 | 10.9 | 11 | 11.5 |
| 1/8" At -30°C | 5.3 | 7.1 | 5.7 | 7.8 | 9 |
| multiaxial Impact strength, at 30°C (J) | | | | | |
| (Emax) | 50 | 56 | 52 | 51 | 46 |
| (Efall) | 55 | 60 | 56 | 56 | 48 |
| Brittle/Ductile | 9/6 | 1/14 | 10/5 | 2/13 | 10/0 |
| Ductile failures, percent | 40 | 93 | 33 | 87 | 0 |

## Claims

1. A thermoplastic molding composition consisting of a blend of (i) 60 to 80 percent polycarbonate resin and (ii) 20 to 40 percent of a mixture of at least two grafted rubbers, said percents being in relation to the weight of the blend, wherein mixture contains
- a small-mode component consisting of a grafted rubber consisting of a substrate having a particle size, weight average, of 0.15 to 0. 28 micron that is a butadiene homopolymer or an interpolymer of 90 to 95 percent by weight butadiene and 5 to 10 percent by weight of acrylonitrile or styrene and a grafted phase consisting of 60 to 85 percent by weight polymerized monovinylidene aromatic hydrocarbons and 15 to 40 percent by weight polymerized unsaturated nitriles and
- a large-mode component containing a grafted rubber consisting of a substrate having a particle size, weight average of 0.35 to 0.65 microns, that is a butadiene homopolymer or an interpolymer of 90 to 95 percent by weight butadiene and 5 to 10 percent by weight of acrylonitrile or styrene and a grafted phase consisting of 60 to 85 percent by weight polymerized monovinylidene aromatic hydrocarbons and 15 to 40 percent by weight polymerized unsaturated nitriles
said mixture further **characterized in that** said small-mode component and large mode component are present in the blend at a weight ratio of 3/27 to 7.5/22.5 therebetween.

2. The thermoplastic molding composition of Claim 1 wherein said blend contains 65 to 75 percent polycarbonate and 25 to 35 percent of said mixture.

3. The thermoplastic molding composition of Claim 1 wherein said range is 3/27 to 5/25.

4. The thermoplastic molding composition of Claim I wherein said small mode component is a product of emulsion polymerization.

5. The thermoplastic molding composition of Claim 1 wherein said large mode component is a product of mass polymerization.

6. The thermoplastic molding composition of Claim 1 wherein said large mode component is a product of continuous mass polymerization.

7. The thermoplastic molding composition of Claim 1 wherein said small mode component contains rubber at an amount of 50 to 60% relative to its weight.

8. The thermoplastic molding composition of Claim 7 wherein said small mode component contains a grafted phase, polymerized monovinylidene aromatic hydrocarbons and polymerized unsaturated nitriles in a weight ratio of 70-80/30-20 therebetween.

9. The thermoplastic molding composition of Claim 7 wherein said small mode component contains a grafted phase, polymerized monovinylidene aromatic hydrocarbons and polymerized unsaturated nitriles in a weight ratio of 75-78/25-22 therebetween.

10. The thermoplastic molding composition of Claim 1 wherein said large mode component contains rubber at an amount of 14 to 20% relative to its weight.

11. The thermoplastic molding composition of Claim 10 wherein said large mode component contains a grafted phase, polymerized monovinylidene aromatic hydrocarbons and polymerized unsaturated nitriles in a weight ratio of 70-80/30-20 therebetween.

12. The thermoplastic molding composition of Claim 10 wherein said large mode component contains a grafted phase, polymerized monovinylidene aromatic hydrocarbons and polymerized unsaturated nitriles in a weight ratio of 75-78/25-22 therebetween.

## Patentansprüche

1. Thermoplastische Formungszusammensetzung, bestehend aus einem Gemisch aus (i) 60 bis 80 % Polycarbonatharz und (ii) 20 bis 40 % einer Mischung aus mindestens 2 gepfropften Gummiprodukten, wobei die genannten Prozente auf das Gewicht des Gemisches bezogen sind, worin die Mischung enthält:
eine Komponente von kleinem Modus, bestehend aus einem gepfropften Gummi, bestehend aus einem Substrat mit einer gewichtsdurchschnittlichen Partikelgröße von 0,15 bis 0,28 µm, das ein Butadien-Homopolymer oder ein Interpolymer aus 90 bis 95 Gew.% Butadien und 5 bis 10 Gew.% Acrylnitril oder Styrol ist, und aus einer gepfropften Phase, bestehend aus 60 bis 85 Gew.% polymerisierten aromatischen Monovinyliden-Kohlenwasserstoffen und 15 bis 40 Gew.% polymerisierten ungesättigten Nitrilen, und
eine Komponente vom großen Modus, enthaltend einen gepfropften Gummi, bestehend aus einem Substrat mit einer gewichtsdurchschnittlichen Partikelgröße von 0,35 bis 0,65 µm, das ein Butadien-Hompolymer oder ein Interpolymer aus 90 bis 95 Gew.% Butadien und 5 bis 10 Gew.% Acrylnitril oder Styrol ist, und aus einer gepfropften Phase, bestehend aus 60 bis 85 Gew.% polymerisierten aromatischen Monovinyliden-Kohlenwasserstoffen und 15 bis 40 Gew.% polymerisierten ungesättigten Nitrilen,
wobei die genannte Mischung ferner **dadurch gekennzeichnet ist, dass** die genannte Komponente vom kleinen Modus und die genannte Komponente vom großen Modus im Gemisch in einem Gewichtsverhältnis von 3/27 bis 7,5/22,5 vorhanden sind.

2. Thermoplastische Formungszusammensetzung gemäß Anspruch 1, worin das genannte Gemisch 65 bis 75 % Polycarbonatharz und 25 bis 35 % der genannten Mischung enthält.

3. Thermoplastische Formungszusammensetzung gemäß Anspruch 1, worin der genannte Bereich 3/27 bis 5/25 beträgt.

4. Thermoplastische Formungszusammensetzung gemäß Anspruch 1, worin die genannte Komponente vom kleinen Modus das Produkt einer Emulsionspolymerisation ist.

5. Thermoplastische Formungszusammensetzung gemäß Anspruch 1, worin die genannte Komponente vom großem Modus das Produkt einer Massepolymerisation ist.

6. Thermoplastische Formungszusammensetzung gemäß Anspruch 1, worin die genannte Komponente vom großen Modus das Produkt einer kontinuierlichen Massepolymerisation ist.

7. Thermoplastische Formungszusammensetzung gemäß Anspruch 1, worin die genannte Komponente vom kleinen Modus Gummi in einer Menge von 50 bis 60 Gew.% enthält.

8. Thermoplastische Formungszusammensetzung gemäß Anspruch 7, worin die genannte Komponente vom kleinen Modus die gepfropfte Phase aus polymerisierten aromatischen Monovinyliden-Kohlenwasserstoffen und polymerisierten ungesättigten Nitrilen in einem Gewichtsverhältnis von 70 bis 80/30 bis 20 enthält.

9. Thermoplastische Formungszusammensetzung gemäß Anspruch 7, worin die genannte Komponente vom kleinen Modus die gepfropfte Phase aus polyperisierten aromatischen Monovinyliden-Kohlenwasserstoffen und polymerisierten ungesättigten Nitrilen in einem Gewichtsverhältnis von 75 bis 78/25 bis 22 enthält.

10. Thermoplastische Formungszusammensetzung gemäß Anspruch 1, worin die die genannte Komponente vom großen Modus den Gummi in einer Menge von 14 bis 20 Gew.% enthält.

11. Thermoplastische Formungszusammensetzung gemäß Anspruch 10, worin die genannte Komponente vom großen Modus die gepfropfte Phase aus polymerisierten aromatischen Monovinyliden-Kohlenwasserstoffen und polymerisierten ungesättigten Nitrilen in einem Gewichtsverhältnis von 70 bis 80/30 bis 20 enthält.

12. Thermoplastische Formungszusammensetzung gemäß Anspruch 10, worin die genannte Komponente vom großen Modus die gepfropfte Phase aus polymerisierten aromatischen Monovinyliden-Kohlenwasserstoffen und polymerisierten ungesättigten Nitrilen in einem Gewichtsverhältnis von 75 bis 78/25 bis 22 enthält.

## Revendications

1. Composition de moulage thermoplastique constituée par une combinaison de (i) de 60 à 80 % d'une résine polycarbonate et (ii) de 20 à 40 % d'un mélange d'au moins deux caoutchoucs greffés, lesdits pourcentages étant exprimés par rapport à la masse de la combinaison, où le mélange contient
- un composant de petit mode consistant en un caoutchouc greffé constitué d'un substrat ayant une dimension de particules, en moyenne pondérée, de 0,15 à 0,28 micron, qui est un homopolymère du butadiène ou un interpolymère de 90 à 95 % en masse de butadiène et de 5 à 10 % en masse d'acrylonitrile ou de styrène, et d'une phase greffée constituée par de 60 à 85 % en masse d'hydrocarbures aromatiques monovinylidène polymérisés et de 15 à 40 % en masse de nitriles insaturés polymérisés et
- un composant de grand mode consistant en un caoutchouc greffé constitué d'un substrat ayant une dimension de particules, en moyenne pondérée, de 0,35 à 0,65 micron, qui est un homopolymère du butadiène ou un interpolymère de 90 à 95 % en masse de butadiène et de 5 à 10 % en masse d'acrylonitrile ou de styrène, et d'une phase greffée constituée par de 60 à 85 % en masse d'hydrocarbures aromatiques monovinylidène polymérisés et de 15 à 40 % en masse de nitriles insaturés polymérisés
ledit mélange étant en outre **caractérisé en ce que** ledit composant de petit mode et ledit composant de grand mode sont présents dans le mélange sous un rapport de masse, l'un par rapport à l'autre, de 3/27 à 7,5/22,5.

2. Composition de moulage thermoplastique selon la revendication 1, dans laquelle ladite combinaison contient de 65 à 75 % de polycarbonate et de 25 à 35 % dudit mélange.

3. Composition de moulage thermoplastique selon la revendication 1, dans laquelle ledit intervalle est de 3/27 à 5/25.

4. Composition de moulage thermoplastique selon la revendication 1, dans laquelle ledit composant de petit mode est un produit de polymérisation en émulsion.

5. Composition de moulage thermoplastique selon la revendication 1, dans laquelle ledit composant de grand mode est un produit de polymérisation en masse.

6. Composition de moulage thermoplastique selon la revendication 1, dans laquelle ledit composant de grand mode est un produit de polymérisation en masse continue.

7. Composition de moulage thermoplastique selon la revendication 1, dans laquelle ledit composant de petit mode contient une quantité de caoutchouc de 50 à 60 % par rapport à sa masse.

8. Composition de moulage thermoplastique selon la revendication 7, dans laquelle ledit composant de petit mode contient une phase greffée, dont les hydrocarbures aromatiques monovinylidène polymérisés et les nitriles insaturés polymérisés sont sous un rapport de masse, l'un par rapport à l'autre, de 70-80/30-20.

9. Composition de moulage thermoplastique selon la revendication 7, dans laquelle ledit composant de petit mode contient une phase greffée, dont les hydrocarbures aromatiques monovinylidène polymérisés et les nitriles insaturés polymérisés sont sous un rapport de masse, l'un par rapport à l'autre, de 75-78/25-22.

10. Composition de moulage thermoplastique selon la revendication 1, dans laquelle ledit composant de grand mode contient une quantité de caoutchouc de 14 à 20 % par rapport à sa masse.

11. Composition de moulage thermoplastique selon la revendication 10, dans laquelle ledit composant de grand mode contient une phase greffée, dont les hydrocarbures aromatiques monovinylidène polymérisés et les nitriles insaturés polymérisés sont sous un rapport de masse, l'un par rapport à l'autre, de 70-80/30-20.

12. Composition de moulage thermoplastique selon la revendication 10, dans laquelle ledit composant de grand mode contient une phase greffée, dont les hydrocarbures aromatiques monovinylidène polymérisés et les nitriles insaturés polymérisés sont sous un rapport de masse, l'un par rapport à l'autre, de 75-78/25-22.
